# FASCICULE DE BREVET EUROPEEN

(11) **EP 3 709 617 B1**
(45) Date de publication et mention de la délivrance du brevet: **01.11.2023**
(21) Numéro de dépôt: 20162289.1
(22) Date de dépôt: 11.03.2020
(51) Int. Cl.: H04M 11/02, H04N 7/18

(54) **SYSTEME DE COMMUNICATION ENTRE UN PORTIER ET UN TELEPHONE A PUCE**
KOMMUNIKATIONSSYSTEM ZWISCHEN EINEM TÜRÖFFNER UND EINEM CHIPTELEFON
SYSTEM FOR COMMUNICATION BETWEEN AN INTERPHONE AND A SMARTPHONE

(30) Priorité: 14.03.2019 FR 1902594
(43) Date de publication de la demande: 16.09.2020
(73) Titulaire: Amphitech, 75011 Paris (FR)
(72) Inventeur: MAINGRET, Xavier, 94420 Le Plessis Trévise (FR)
(74) Mandataire: Eidelsberg, Olivier Nathan

(56) Documents cités:
- US-A1- 2012 001 755
- US-A1- 2017 169 679
- US-A1- 2017 280 109
- US-A1- 2017 289 359

## Description

La présente invention se rapporte à un système de communication entre une personne se trouvant à un portier, par exemple un portier de façade d'immeuble, un portier de surveillance ou analogue, et une personne se trouvant à distance de ce portier, la personne à distance disposant d'un téléphone à puce ou "smartphone" pour communiquer avec la personne se trouvant au portier.

On connaît déjà dans l'art antérieur un système de communication de ce genre, dans lequel une liaison par le réseau téléphonique 3G, 4G ou 5G s'effectue entre le portier et le téléphone à puce. Lorsqu'une personne se présente, par exemple à un domicile, et appuie sur le bouton d'appel du portier, la personne disposant du téléphone peut ne pas se trouver chez elle et cependant savoir que quelqu'un est en train de lui demander l'accès à la porte. Il peut alors répondre à cette personne et la visionner sur l'écran de son téléphone comme s'il était à domicile.

La liaison téléphonique transmet à la fois les données vocales et les images. Il en résulte que la batterie du téléphone portable à puce peut vite se décharger en raison du flux de vidéo/audio, notamment si la conversation s'éternise, et sa consommation DATA ou données de l'abonnement de sa carte SIM peut augmenter.

On connaît par exemple de US2012/0001755A1 un système de ce genre, dans lequel l'ensemble des communications vocales et vidéo s'effectue par l'intermédiaire d'un serveur d'un réseau privé entre le portier et le téléphone à puce (smartphone) de la personne à distance. On connaît également de US2017/169679A1 un système de communication comportant un portier capable de communiquer de la vidéo avec un poste à distance. On connaît de US2017/289359A1 un système de sécurité couplé à un système de verrouillage de porte dans lequel une vidéo d'une personne présente devant la serrure est prise.

La présente invention vise à surmonter les inconvénients de l'art antérieur en proposant un système de communication entre un portier et un poste à distance, notamment sous la forme d'un téléphone portable, notamment à puce, qui permet d'économiser la consommation d'énergie du poste à distance, notamment dans le cas où il fonctionne sur batterie uniquement, tel qu'un téléphone portable, ainsi que la consommation de données transmises par la liaison entre le portier et le téléphone.

Suivant l'invention, un système de communication est tel que défini à la revendication 1.

Ainsi, en ne recevant la vidéo que du serveur pendant une communication vocale entre le portier et le poste à distance, on limite la consommation de données de l'abonnement de la carte SIM. En outre, on peut se passer de la technologie VolP (IP-PBX, centrex) pour recevoir à la fois la communication audio et vidéo nécessitant une application de communication dédiée, telle que IP-PBX, centrex. Un avantage supplémentaire est que même si le réseau 3G/4G/5G n'est pas disponible, la communication vocale existe toujours, permettant à l'utilisateur à distance d'être informé de la présente d'un visiteur au portier.

Suivant un mode de réalisation avantageux, les données vocales sont transmises à un premier poste (B) et les données vidéo à un deuxième poste, différent du premier poste.

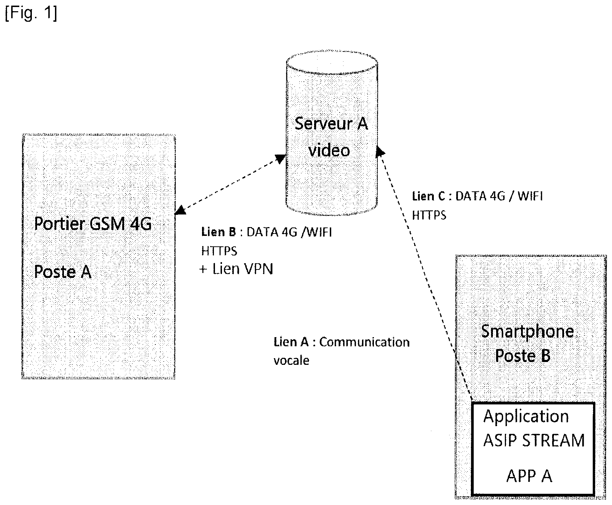

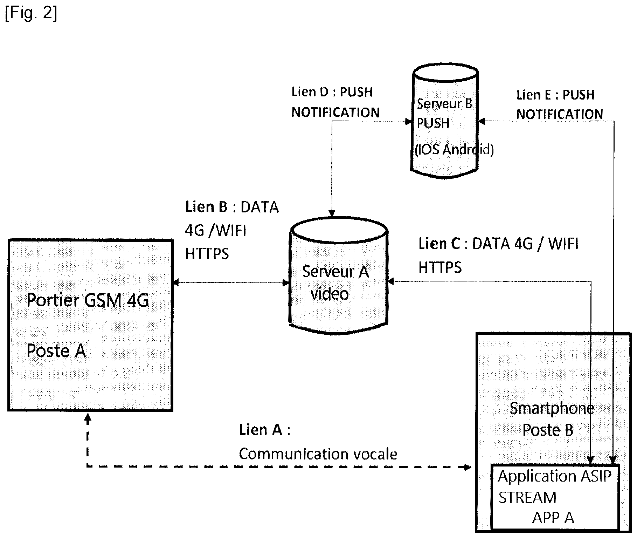

A titre d'exemple, on décrit maintenant un mode de réalisation préféré de l'invention en se reportant à la figure 1 qui représente de manière schématique un système suivant un mode de réalisation de l'invention et à la figure 2 qui représente un autre mode de réalisation suivant un perfectionnement de l'invention.

Suivant l'invention, par action sur le bouton d'appel d'un poste A de type GSM 4G, le poste B est appelé par le biais (lien A) d'une connexion GSM. Sur action de l'utilisateur du poste B, l'appel entrant est accepté sur le poste B, la communication vocale débute entre le poste A et le poste B sur le lien A.

Le poste A, à la suite de l'acceptation de la communication sur le lien A, se connecte en DATA 4G (lien B) vers le serveur vidéo (Serveur A), une connexion au format HTTPS est établie pour :
- Envoyer une requête d'avertissement d'une communication vocale GSM entre le poste A et le poste B.
- Etablir une connexion VPN entre le poste A et le serveur A.
- Envoyer une requête au serveur A pour indiquer l'adresse IP VPN, et d'autres informations utiles à la récupération du flux vidéo issu de ce POSTE A.

A réception des informations sur le serveur A, cette connexion VPN va être identifiée sur le serveur A comme appartenant à la session d'appel GSM entre le poste A et le poste B, seul l'appelé (poste B) disposant des droits sur le serveur A (login, mot de passe... ) sera capable de récupérer le flux vidéo MJPEG du POSTE A.

Le serveur A créer une redirection de l'adresse IP VPN du POSTE A diffusant le flux vidéo de type MJPEG sur le serveur A sous forme d'adresse : https://26.10.0.6:8080/?action=stream, vers une adresse URL sous forme : https://amphitech.fr/api/v2/stream/token/etc/) qui sera consultable par l'APP A.

L'adresse IP VPN du POSTE A est stockée dans une table associée au identifiant du POSTE A et à la connexion vocale GSM entre le POSTE A et le POSTE B.

L'application APP A installée sur le poste B s'ouvre en premier plan sur l'afficheur LCD du poste B à la suite de l'activité vocale présente sur le lien A, l'APP A va se connecter par le lien C en DATA 3G/4G/5G (connexion HTTPS) , en fonction des autorisations (Numéro appelé, compte utilisateur, droit de récupération vidéo..), le serveur A va envoyer à cette application l'adresse URL HTTPS de récupération du flux vidéo, qui pourra être affichée sur l'écran du POSTE B à travers l'APP A.

L'application APP A bascule le poste B en mode mains libres permettant à l'utilisateur du poste B de visualiser la vidéo tout en étant capable d'établir une communication audio via le lien A avec le poste A.

Un mécanisme d'association du poste A (clé client : TOKEN, numéro de série..) est utilisé pour déposer (via le lien B) et identifier le flux vidéo sur le serveur A.

Cette clé d'identification utilisée pour le dépôt de la vidéo sur le serveur A, permet au lien C disposant de cette même clé, de réceptionner le flux vidéo uniquement du poste A.

L'APP A n'activera uniquement le flux vidéo du portier A que si l'identité SDA (numéro de téléphone) de l'appelant est renseignée dans la liste des numéros appelant surveillés par l'application (configuration).

En fonction des droits du compte utilisateur de l'application APP A sur le serveur A, cette application pourra émettre d'autres requêtes auprès du serveur A pour gérer le poste A à distance, comme la commande de l'activation des relais gâche, l'envoi d'images.

A la figure 2, il est représenté une variante du système de l'invention dans laquelle le poste B reçoit une notification PUSH permettant, sur clic de cette notification l'ouverture de l'APP A. En fonction des autorisations (Numéro appelé, compte utilisateur, droit de récupération vidéo,... etc) le serveur A envoie à cette application l'adresse URL HTTPS de récupération du flux vidéo, qui pourra être affiché sur l'écran du poste B par l'intermédiaire de l'APP A.

L'utilisation d'un serveur PUSH (Serveur B) (sous Androïd (marque déposée), APPLE (marque déposée) ou analogue) est sollicitée de sorte que le serveur A demande l'autorisation de réveil du poste B. Pour l'envoi d'une notification push, le serveur A transmet la notification PUSH par le lien D au serveur B. pour ce faire, il indique l'identifiant concerné et le message associé. Le serveur b vérifie les paramètres PUSH (autorisations et identité de l'application) et transmet la notification au poste B par le lien E permettant de réveiller l'APP A.

Ainsi, au décoché de l'appel, l'application ASIP STREAM en tâche de fond questionne le serveur vidéo afin de savoir si son numéro de téléphone et un identifiant de portier son en communication (liste des identifiants dans la base de donnée de l'application renseigné par l'utilisateur). Le système de notifications envoyées par le serveur vers le service PUSH réveille le smartphone et informe l'utilisateur qu'une vidéo est disponible. Au clic sur la notification l'application s'ouvre avec la vidéo.

## Revendications

1. Système de communication comportant au moins un poste (A) dit portier téléphonique capable de communiquer de la vidéo et de l'audio par l'intermédiaire de lignes téléphoniques, avec un poste (B) à distance, le système comportant aussi au moins un poste formant serveur intermédiaire **caractérisé en ce que**
la communication entre le poste (A) et le poste (B) à distance s'effectue en direct uniquement pour la communication vocale par GSM ; et
le au moins un poste intermédiaire, comprenant un serveur vidéo, reçoit les données vidéo du poste (A) et les transmet au poste (B) à distance lorsque la communication vocale directe a été établie entre le poste (A) et le poste (B) à distance,
le poste (A), à la suite de l'acceptation d'une communication avec le poste (B), se connecte par un lien en DATA 4G vers le serveur vidéo, une connexion au format HTTPS étant établie pour envoyer une requête d'avertissement d'une communication vocale entre le poste (A) et le poste (B) à distance, établir une connexion VPN entre le poste (A) et le serveur vidéo, et envoyer une requête au serveur vidéo pour indiquer l'adresse IP VPN, et d'autres informations utiles à la récupération du flux vidéo issu de ce poste (A) ;
à la réception des informations sur le serveur vidéo, la connexion VPN est identifiée sur le serveur vidéo comme appartenant à la session d'appel entre le poste (A) et le poste (B) à distance,
le serveur vidéo créé une redirection de l'adresse IP VPN du poste (A) diffusant le flux vidéo sur le serveur vidéo, vers une adresse URL consultable par une application (APP A) installée sur le poste (B) à distance,
l'adresse IP VPN du poste (A) est stockée dans une table associée au identifiant du poste (A) et à la connexion vocale entre le poste (A) et le poste (B) à distance,
l'application (APP A) se connectant par un lien en DATA 3G/4G/5G, le serveur vidéo envoyant à l'application (APP A) l'adresse URL de récupération du flux vidéo.

2. Système de communication suivant la revendication 1, **caractérisé en ce que** les données vocales sont transmises à un premier poste (B) et les données vidéo à un deuxième poste, différent du premier poste.

3. Système de communication suivant la revendication 1 ou 2, **caractérisé en ce qu'**il est prévu un serveur auxiliaire entre le poste (B) à distance destiné à recevoir les données vidéo et le poste intermédiaire.

4. Système suivant la revendication 3, **caractérisé en ce que** le serveur auxiliaire permet le réveil du téléphone portable, notamment smartphone et de notifier l'utilisateur au poste à distance de l'existence des données vidéo.

5. Système suivant la revendication 4, **caractérisé en ce que** en cliquant sur la notification reçue, l'utilisateur reçoit les données vidéo.

## Patentansprüche

1. Kommunikationssystem, das mindestens eine Türsprechanlage genannte Station (A) aufweist, die fähig ist, eine Video- und Audiokommunikation mittels Telefonleitungen mit einer entfernten Station (B) durchzuführen, wobei das System auch mindestens eine einen Zwischenserver bildende Station aufweist,
**dadurch gekennzeichnet, dass**
die Kommunikation zwischen der Station (A) und der entfernten Station (B) nur für die Sprachkommunikation über GSM direkt ausgeführt wird; und
die einen Videoserver enthaltende mindestens eine Zwischenstation die Videodaten von der Station (A) empfängt und sie an die entfernte Station (B) überträgt, wenn die direkte Sprachkommunikation zwischen der Station (A) und der entfernten Station (B) hergestellt wurde,
nach der Annahme einer Kommunikation mit der Station (B) die Station (A) sich durch einen DATA 4G-Link zum Videoserver verbindet, wobei eine Verbindung im HTTPS-Format hergestellt wird, um
eine Benachrichtigungsanforderung einer Sprachkommunikation zwischen der Station (A) und der entfernten Station (B) zu senden,
eine VPN-Verbindung zwischen der Station (A) und dem Videoserver herzustellen, und
eine Anforderung an den Videoserver zu senden, um die IP-Adresse VPN und andere für den Abruf des von dieser Station (A) kommenden Videostroms nützliche Informationen anzuzeigen;
beim Empfang der Informationen im Videoserver die VPN-Verbindung im Videoserver als zur Anrufsitzung zwischen der Station (A) und der entfernten Station (B) gehörend identifiziert wird,
der Videoserver eine Weiterleitung der IP-Adresse VPN der den Videostrom im Videoserver aussendenden Station (A) zu einer URL-Adresse erzeugt, die von einer in der entfernten Station (B) installierten Anwendung (APP A) konsultiert werden kann,
die IP-Adresse VPN der Station (A) in einer Tabelle gespeichert wird, die der Kennung der Station (A) und der Sprachverbindung zwischen der Station (A) und der entfernten Station (B) zugeordnet ist,
wobei die Anwendung (APP A) sich durch ein DATA 3G/4G/5G-Link verbindet, wobei der Videoserver die URL-Adresse zum Abruf des Videostroms an die Anwendung (APP A) sendet.

2. Kommunikationssystem nach Anspruch 1, **dadurch gekennzeichnet, dass** die Sprachdaten an eine erste Station (B) und die Videodaten an eine zweite Station anders als die erste Station übertragen werden.

3. Kommunikationssystem nach Anspruch 1 oder 2, **dadurch gekennzeichnet, dass** ein Hilfsserver zwischen der entfernten Station (B), die dazu vorgesehen ist, die Videodaten zu empfangen, und der Zwischenstation vorgesehen ist.

4. System nach Anspruch 3, **dadurch gekennzeichnet, dass** der Hilfsserver das Einschalten des Mobiltelefons, insbesondere Smartphones, und die Mitteilung des Vorhandenseins der Videodaten an den Benutzer an der entfernten Station erlaubt.

5. System nach Anspruch 4, **dadurch gekennzeichnet, dass** der Benutzer die Videodaten durch Anklicken der empfangenen Mitteilung empfängt.

## Claims

1. Communication system comprising at least one unit (A) referred to as a telephone intercom unit, which is capable of communicating video and audio via telephone lines with a remote unit (B), the system also comprising at least one unit forming an intermediate server, **characterised in that**
communication between the unit (A) and the remote unit (B) takes place directly solely for voice communication via GSM; and
the at least one intermediate unit, comprising a video server, receives video data from the unit (A) and transmits said data to the remote unit (B) when direct voice communication has been established between the unit (A) and the remote unit (B),
the unit (A), after accepting a communication with the unit (B), connects via a 4G DATA link to the video server, an HTTPS format connection being established in order to send a request warning of a voice communication between the unit (A) and the remote unit (B),
establish a VPN connection between the unit (A) and the video server, and send a request to the video server to provide the VPN IP address, and other information that might help to recover the video stream from this unit (A);
on receipt of the information at the video server, the VPN connection is identified on the video server as belonging to the call session between the unit (A) and the remote unit (B),
the video server creates a redirection of the VPN IP address of the unit (A) broadcasting the video stream on the video server to a URL address that can be consulted by an application (APP A) installed on the remote unit (B), the VPN IP address of the unit (A) is stored in a table associated with the unit (A) ID and the voice connection between the unit (A) and the remote unit (B),
the application (APP A) connecting via a 3G/4G/5G DATA link, the video server sending the URL address to recover the video stream to the application (APP A).

2. Communication system according to claim 1, **characterised in that** the video data is transmitted to a first unit (B) and the video data is transmitted to a second unit, which is different from the first unit.

3. Communication system according to either claim 1 or claim 2, **characterised in that** an auxiliary server is provided between the remote unit (B) that is intended to receive the video data and the intermediate unit.

4. System according to claim 3, **characterised in that** the auxiliary server enables the mobile phone, particularly a smartphone, to wake up and enables the user at the remote unit to be notified that video data is available.

5. System according to claim 4, **characterised in that** the user receives the video data by clicking on the notification they have received.
